# EUROPEAN PATENT APPLICATION

(11) **EP 1 296 007 A1**
(43) Date of publication of application: **26.03.2003**
(21) Application number: 01934366.4
(22) Date of filing: 28.05.2001
(51) Int. Cl.: E04H 14/00, B60S 5/02, H04M 11/00

(54) **ECOLOGY ACCESS POINT**

(30) Priority: 19.06.2000 JP 2000182981
(71) Applicant: Wakamatsu, Hiroyuki, Tokyo 151-0062 (JP)
(72) Inventor: Wakamatsu, Hiroyuki, Tokyo 151-0062 (JP)
(74) Representative: Körfer, Thomas, Dipl.-Phys.
(86) International application number: JP0104436
(87) International publication number: WO01098608

(57) **Abstract**

The present invention provides an ecology connection point which is a connection and transit site of information communication such as a telephone and an ISDN utilizing natural energy and provided by an Internet provider, comprising a server facility which carries out connection and relay of information communication, a gas station facility which refuels and charges vehicles, and a natural energy converting facility which converts natural energy such as solar energy and wind power energy into electric power.

## Description

### TECHNICAL FIELD

The present invention relates to a connection point which is a connection and transit site of information communication such as a telephone, an ISDN and the like provided by an Internet provider, and more particularly, the invention relates to an ecology connection point utilizing natural energy.

### BACKGROUND TECHNIQUE

At present, as the number of users of the Internet suddenly increases, connection points are going nationwide rapidly. A server of the present connection point is in service for 24 hours , and much cost is required to monitor the server directly or through a monitor from an Internet provider center.

On the other hand, in the case of depressed business such as gas stations, it is difficult to continue the business in many cases.

Although there are slight structural differences between gas stations, the gas stations have minimum site areas and common equipment, and exist everywhere in the country in proportion to population density in each area.

Therefore, if the gas stations existing everywhere in the country in proportional to population density in each area and having minimum site areas and common equipment can be reused as connection points, it is possible to effectively utilize the existing equipment.

In recent years, an environmental problem and an energy problem are also important problems, and it is desired to effectively utilize energy and water obtained from nature, and to bring an information technique function into operation.

Thereupon, it is an object of the present invention to provide an ecology connection point which is capable of being managed independently by effectively utilizing the natural energy, and which has a function as a base station of data communication.

Further, it is another object of the invention to provide an ecology connection point capable of reusing gas stations existing everywhere in the country in proportional to population density in each area and having minimum site areas and common equipment.

Further, it is another object of the invention to provide an ecology connection point capable of covering at least a portion of electric power used for a server facility or a gas station facility by natural energy.

Further, it is another object of the invention to provide an ecology connection point capable of effectively utilizing an existing gas station facility, and capable of constructing, for a short time, a server facility which requires the longest time for construction.

Further, it is another object of the invention to provide a management system of a connection point capable of constructing and maintaining facilities suitable for respective areas by managing usage charges in accordance with users from one connection point area to another connection point area constructed in respective regions.

### DISCLOSURE OF THE INVENTION

A first aspect of the present invention provides an ecology connection point which is a connection and transit site of information communication such as a telephone and an ISDN utilizing natural energy and provided by an Internet provider, comprising a server facility which carries out connection and relay of information communication, a gas station facility which refuels and charges vehicles, and a natural energy converting facility which converts natural energy such as solar energy and wind power energy into electric power.

According to the ecology connection point of the first aspect of the invention, it is possible to effectively reuse, as the connection point, facilities of gas stations which have minimum site areas and common equipment and which exist everywhere in the country in proportion to population density in each area. Since the gas station facility which refuels and charges vehicles usually have a predetermined site area, this is effective for arranging the natural energy converting facility which converts natural energy such as solar energy and wind power energy into electric power.

According to a second aspect of the invention, in the ecology connection point of the first aspect, electric power converted by the natural energy converting facility is used for the server facility and the gas station facility.

According to the second aspect of the invention, at least a portion of electric power used for the server facility and the gas station facility can be covered by natural energy.

According to a third aspect of the invention, in the ecology connection point of the first aspect, electric power converted by the natural energy converting facility is used as electric power of a plasma advertisement.

According to the third aspect of the invention, at least a portion of electric power used for the plasma advertisement can be covered by natural energy, and since the natural energy is used, the advertising effect of the ecology connection point can be enhanced.

According to afourth aspect of the invention, in the ecology connection point of the first aspect, roofs of constructions of the server facility and the gas station facility are provided with a solar function utilizing sun light, a lighting function for introducing sun light into the construction, an antenna function for receiving radio wave, and a water-gathering function for gathering rain water.

According to the fourth aspect of the invention, since the roofs of constructions of the facilities are provided with the solar facility, the lighting function and the water-gathering function, it is possible to effectively utilize the natural energy and water. Since the antenna function is provided, it is possible to have a function as a base station of data communication. Especially, a solar panel for obtaining the solar function can be utilized for providing the water-gathering function, and the solar panel can also be utilized as a directional antenna having a reflection surface such as a parabolic antenna.

According to a fifth aspect of the invention, in the ecology connection point of the first aspect, a water tank is arranged between the ground and a gasoline reservoir used for the gas station facility.

According to the fifth aspect of the invention, since the water tank is arranged above the gasoline reservoir, an existing space can effectively be utilized, and the water tank can have an explosionproof function.

According to a sixth aspect of the invention, in the ecology connection point of the first aspect, the gas station facility is replaced by a convenience store facility, a book center facility, a bank facility, a restaurant facility, a distribution facility or a parking facility.

According to the sixth aspect of the invention, the ecology connection point is suitable not only for the gas station facility, but also for a convenience store facility, a book center facility, a bank facility, a restaurant facility, a distribution facility, and a parking facility.

A seventh aspect of the invention provides a constructing method of an ecology connection point which is a connection and transit site of information communication such as a telephone and an ISDN provided by an Internet provider, comprising a server facility which carries out connection and relay of information communication, a goods or service providing facility such as a gas station facility which refuels and charges vehicles, and a natural energy converting facility which converts natural energy such as solar energy and wind power energy into electric power, wherein the server facility is previously constructed and unitized as a server room, the server room is transferred into a site having the gas station facility using a trailer.

According to the seventh aspect of the invention, it is possible to effectively utilize an existing gas station facility, and a server facility which requires the longest time for construction can be constructed for a short time. Therefore, it is possible to not only reduce the constructing cost, but also easily develop the connection point.

An eighth aspect of the invention provide a management system of an ecology connection point which is a connection and transit site of information communication such as a telephone and an ISDN provided by an Internet provider, comprising a server facility which carries out connection and relay of information communication, a goods or service providing facility such as a gas station facility which refuels and charges vehicles, and a natural energy converting facility which converts natural energy such as solar energy and wind power energy into electric power, wherein a usage charge of the provider is set to a fixed charge, the number of contractors utilizing the ecology connection point is measured, at least a portion of the usage charge of the measured number of contractors is used for management of the ecology connection point.

According to the eighth aspect of the invention, since the usage charge is managed in accordance with users in each connection point area in each region, it is possible to construct and maintain a facility suitable for each area.

A ninth aspect of the invention provides a management system of a connection point of an Internet provider having a plurality of connection points, wherein a usage charge of the provider is set to a fixed charge, the number of contractors of each connection point is measured, at least a portion of the usage charge of the measured number of contractors is used for management of respective said connection points.

According to the ninth aspect of the invention, since the usage charge is managed in accordance with users in each connection point area in each region, it is possible to construct and maintain a facility suitable for each area.

### BRIEF DESCRIPTION OF THE DRAWINGS

Fig.1 is a plan view showing an outline structure of a facility of an ecology connection point utilizing a gas station according to an embodiment of the present invention, and
Fig.2 is a perspective view of the outline structure of the facility.

### BEST MODE FOR CARRYING OUT THE INVENTION

An outline structure of an ecology connection point according to an embodiment of the present invention will be explained below.

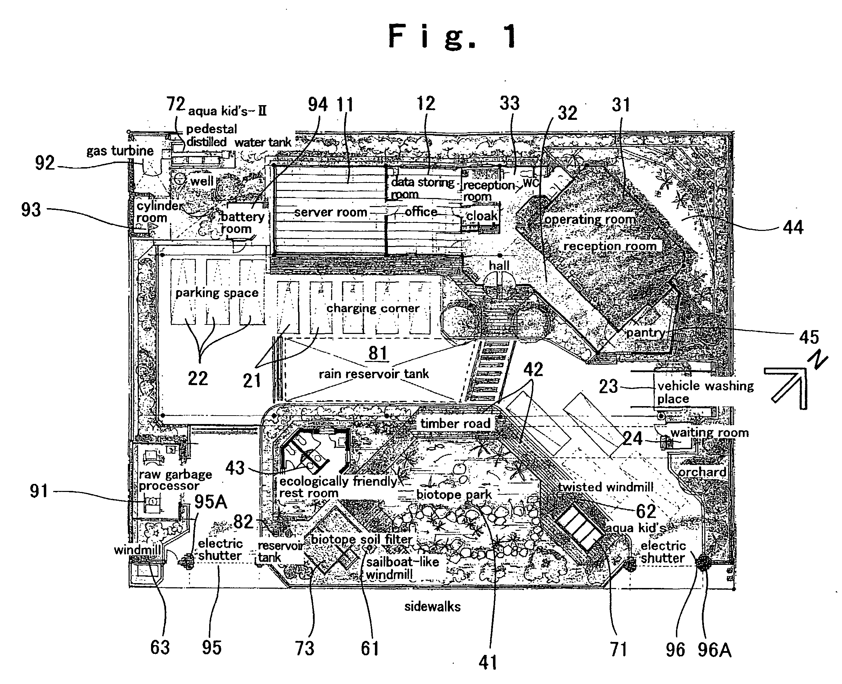

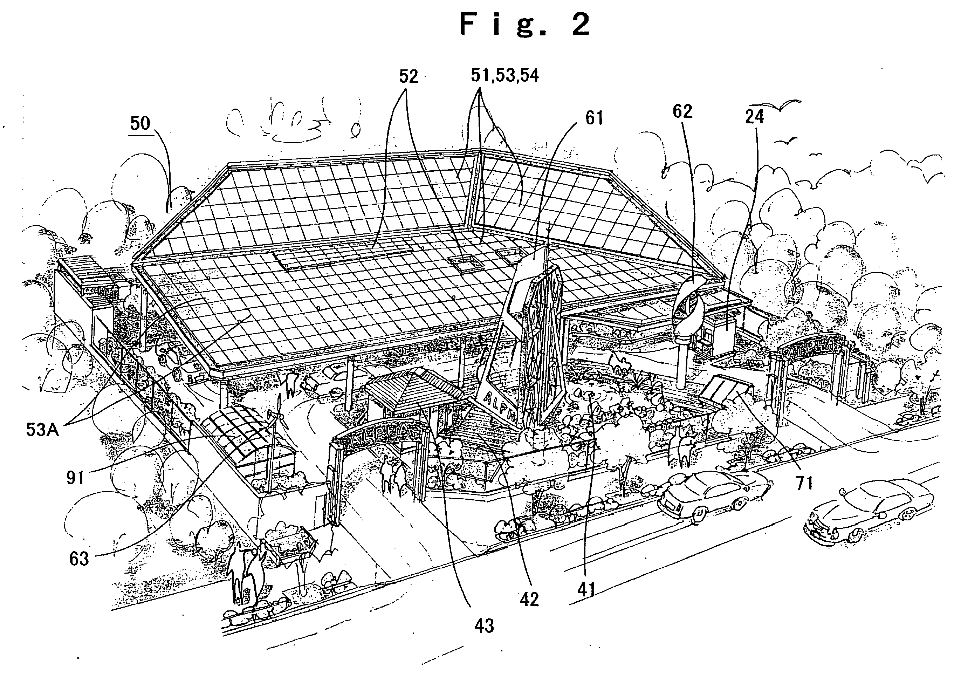

Fig.1 is a plan view showing an outline structure of a facility of an ecology connection point utilizing a gas station according to an embodiment of the present invention, and Fig.2 is a perspective view of the outline structure of the facility.

The ecology connection point shown in this embodiment is a facility as a connection and transit site of information communication such as a telephone, an ISDN and the like provided by an Internet provider. The ecology connection point includes a server facility for connecting and relaying for information communication, a gas station facility for supplying fuel or electricity to a vehicle, and a natural energy converting facility for converting natural energy such as solar energy and wind power energy into electric power.

The server facility includes a server room 11 having devices for connecting and relaying for information communication, and an office 12 having a data recorder for recording communication data, a reception room, a cloak room and the like.

The gas station facility includes a charging area 21 having a charger for charging a vehicle, a parking area 22 for carrying out maintenance of a vehicle, a car wash area 23 for washing a vehicle, and a waiting room 24 where a mechanic or a service man stay on standby.

The gas station facility also includes a reception room 31, a hall 32 and a lavatory 33 as multi-purpose indoor facilities.

Constructed in the same area as outdoor facilities are a biotope park 41 where aquatic animals and plants live, a lodge-like timber road 42 disposed around the biotope park, and an ecologically friendly rest room 43. A pond 44 and a pantry 45 are also constructed around the reception room as outdoor facilities.

Provided as natural energy converting facilities are: a multi-purpose roof 50 having a solar function 51 for utilizing sun light, a lighting function 52 for guiding sun light into the construction, an antenna function 53 for receiving radio wave, and a water-gathering function 54 for gathering rain water; a sailboat-like windmill 61, a twisted windmill 62 and a windmill 63 for utilizing wind power energy; an aqua kid's 71, a distilled water tank 72 and a biotope soil filter tank 73 each having a water-purification function; a rain reservoir tank 81 and a reservoir tank 82 each having a water-retaining function; a raw garbage processor 91 having a decomposing function utilizing bacteria; a gas turbine 92 for auxiliary obtaining electric power; a cylinder room 93 for storing gas as a power source of the gas turbine 92, and a battery room 94 having a charging function.

An entrance 95 and an exit 96 of the facility respectively includes electric shutters 95A and 96A.

Next, main facilities will be explained.

The server room 11 is unitized into a trailer house which can be towed by a trailer. The server room 11 includes a connection route to and from which energy such as electric power is input and output, and a connection route to which radio wave and an optical fiber can be connected. All devices such as an exchanger for carrying out information communication are included in the server room 11. Since the server room 11 is unitized, it is possible to operate this system within a short period after the construction is determined. For example, in an actual construction, about three months are required for constructing all the facilities such as the rain reservoir tank 81, but even if there is no construction, if the land is adjusted, it is possible to start the operation within about one week by carrying the unitized and previously constructed server room to a site. By unitizing the server room 11, it is possible to move easily the server room 11 if it is judged that the place is not preferable. This feature is especially effective in a desert area or an undeveloped area.

In the biotope park 41, the aqua kid's 71 which purifies water only by natural light (sunlight heat) is allowed to circulate to enhance the water quality so that killifishes and fireflies can be bred, and the aqua kid's 71 always brings back water into a neutral state closer to purified water.

If chlorine is added to water in the pond of the biotope park 41, the pond can be used as a pool, and can be used as a safe play space utilizing nature. Since the water in the pond of the biotope park 41 is always reserved, the water can be used for disaster prevention when a neighboring disaster occurs.

In the ecologically friendly rest room 43, filth and paper are decomposed, and purified water is reused. Filth generated in the ecologically friendly rest room 43 is circulated through a biotope soil filter tank 73 and is always brought into a neutral state closer to purified water by means of a filter function of the biotope soil filter tank 73. Here, the biotope soil filter is a soil filter (multi-layer and multi-stage soil) which decomposes filth.

The antenna function 53 of the multi-purpose roof 50 is provided in its solar plate with a plurality of antennas 53A capable of sending and receiving radio wave and electromagnetic wave from a communications satellite. It is preferable that the antenna function 53 includes a function which converts radio wave and electromagnetic wave from the communications satellite into energy. The multi-purpose roof 50 itself is a large antenna, and radio antenna functions can also be rented for communication traders such as Internet providers as communication sites.

Themulti-purpose roof 50 comprises three inclined surfaces so that rain water can be reserved. A main inclined surface is inclined such that its northwest side is slightly higher than its south-east side, one of sub-inclined surfaces is inclined in the same inclining direction as that of the main inclined surface at a greater inclining angle, and the other sub-inclined surface is inclined at the same inclining angle as that of the one inclined surface such that its north side is higher than its south side. The multi-purpose roof 50 is provided with a plurality of transparent windows which become the lighting function 52 so that sun light partially comes inside the room. The multi-purpose roof 50 covers upper portions of the server facility and the multi-purpose indoor facility, and projects upward of the charging area 21 (or refueling area) and the parking area 22.

The aqua kid's 71 and the distilled water tank 72 purify water only by natural light (sun light heat), and does not require power and driving cost.

The rain reservoir tank 81 reserves therein rain water gathered by the multi-purpose roof 50, and the rain water is used in the lavatory 33 and the ecologically friendly rest room 43, and is used for washing vehicles in the car wash area 23.

The raw garbage processor 91 crushes and stirs garbage by means of power obtained by the windmill 63 to activate bacteria. The raw garbage processor 91 decomposes, into soil, raw garbage generated in neighboring area by stirring the garbage using microbes (biotechnology), and returns the soil to the neighboring area as fertilizer. This fertilizer can also be utilized for gardening.

Next, layout of respective facilities will be explained.

The entrance 95 and the exit 96 of the facility are provided such as to face a road. A vehicle-passable area is formed into a substantially U-shape extending from the entrance 95 to the exit 96. Outdoor facilities surrounding the biotope park 41 are arranged in an area surrounded by the vehicle-passable area and facing the road. The timber road 42, the ecologically friendly rest room 43, the sailboat-like windmill 61, the twisted windmill 62, the aqua kid's 71, the biotope soil filter tank 73 and the reservoir tank 82 are arranged around the biotope park 41. Especially, the biotope park 41, the aqua kid's 71, the ecologically friendly rest room 43 and the biotope soil filter tank 73 are arranged adjacently. Especially the sailboat-like windmill 61 is arranged closer to the road in an area surrounding the biotope park 41. The sailboat-like windmill 61 is provided at its pedestal or windmill portion with an advertisement display portion. The advertisement display portion displays the advertisement in a light-emitting manner like a plasma advertisement so that the advertisement can be seen at nighttime also. Electric power obtained by the sailboat-like windmill 61 is used for this light emitting.

The charging area 21 having a charger for charging vehicles, the parking area 22 for carrying out maintenance of vehicles, and the car wash area 23 for washing vehicles are arranged in the vehicle-passable area. If a gasoline refueling facility is necessary, such a facility is arranged in the vehicle-passable area.

A rain reservoir tank 81 for reserving rain water gathered by the multi-purpose roof 50 is provided underground of the vehicle-passable area. If a gasoline reservoir is provided underground, the rain reservoir tank 81 is arranged between the gasoline reservoir and the ground. By arranging the rain reservoir tank 81 between the gasoline reservoir and the ground in this manner, an explosionproof function can be obtained. Further, if the rain reservoir tank 81 is arranged underground of the vehicle-passable area, the rain reservoir tank 81 can be used as fire prevention.

The server facility comprising the server room 11 and the office 12, as well as reception room 31, the hall 32 and the lavatory 33 as multi-purpose indoor facilities are arranged in an area facing the outdoor facilities surrounding the biotope park 41 through the vehicle-passable area.

The battery room 94 is arranged adjacent to the server room 11. The distilled water tank 72 is also arranged adjacent to the server facility. The gas turbine 92 and the cylinder room 93 are arranged adjacent to the battery room 94. These gas turbine 92, cylinder room 93 and battery room 94 are arranged at corner areas closer to the server facility. If the gas turbine 92, cylinder room 93 and battery room 94 are arranged at corner areas, explosionproof, soundproof and fireproof functions are realized.

The raw garbage processor 91 and the windmill 63 are arranged adjacent to each other along the vehicle-passable area around the entrance 95 or exit 96. If the raw garbage processor 91 is arranged along the vehicle-passable area around the entrance 95 or exit 96 in this manner, neighboring habitants can utilize the raw garbage processor 91.

Next, the management system of the ecology connection point according to the embodiment will be explained.

As incomes, there are a usage charge of the Internet provider, a radio wave income caused by antenna rental, a rental usage charge of line connecting connection points to each other, an advertisement income utilizing electric power of wind power generation, and an income of service such as gas stationmanagement. Concerning the usage charge of the Internet provider among these income sorces, the number of users or contractors are divided by regions for each of stations of the respective connection points, and a portion of the usage charge from the users or contractors in a region where there exists the station is managed as an income source in that connection point. At that time, it is preferable that the usage charge of the Internet provider is a fixed charged. The desirable number of users in one station is 5,000 to 10,000.

In order to manage a portion of the usage charge from users or contractors in a region where there exists a station as an incoming source in that connection point, a managing server is used. The managing server has measuring means for measuring the number of contractors in each of the connection points, and calculating means for allocating the usage charge of the measured number of contractors to respective connection points. If the usage charge is managed in accordance with the users in each connection point area constructed in each region, it is possible to construct and maintain facilities suitable for respective areas.

Although the above embodiment has been explained based on the facility of the gas station, the ecology connection point is suitable for a goods or service providing facility such as not only the gas station facility, but also a convenience store facility, a book center facility, a bank facility, a restaurant facility, a distribution facility, and a parking. If a portion of an apartment construction such as a condominium is provided with a server facility which carries out connection and relay of information communication, and a natural energy converting facility which converts natural energy such as solar energy and wind power energy into electric power, it is possible to eliminate construction maintenance cost of the apartment construction such as common area charge, repairing reserve fund, administrative expense.

### INDUSTRIAL APPLICABILITY

As apparent from the explanation of the embodiment, according to the present invention, it is possible to independently manage a connection point having a function as a base station of data communication by effectively utilizing the natural energy.

Further, according to the invention, it is possible to effectively reuse facilities of gas stations which have minimum site areas and common equipment and which exist everywhere in the country in proportion to population density in each area.

## Claims

1. An ecology connection point which is a connection and transit site of information communication such as a telephone and an ISDN utilizing natural energy and provided by an Internet provider, comprising a server facility which carries out connection and relay of information communication, a gas station facility which refuels and charges vehicles, and a natural energy converting facility which converts natural energy such as solar energy and wind power energy into electric power.

2. An ecology connection point according to claim 1, wherein electric power converted by said natural energy converting facility is used for said server facility and said gas station facility.

3. An ecology connection point according to claim 1, wherein electric power converted by said natural energy converting facility is used as electric power of a plasma advertisement.

4. An ecology connection point according to claim 1, wherein roofs of constructions of said server facility and said gas station facility are provided with a solar function utilizing sun light, a lighting function for introducing sun light into the construction, an antenna function for receiving radio wave, and a water-gathering function for gathering rain water.

5. An ecology connection point according to claim 1, wherein awater tank is arranged between the ground and a gasoline reservoir used for said gas station facility.

6. An ecology connection point according to claim 1, wherein said gas station facility is replaced by a convenience store facility, a book center facility, a bank facility, a restaurant facility, a distribution facility or a parking facility.

7. A constructing method of an ecology connection point which is a connection and transit site of information communication such as a telephone and an ISDN provided by an Internet provider, comprising a server facility which carries out connection and relay of information communication, a goods or service providing facility such as a gas station facility which refuels and charges vehicles, and a natural energy converting facility which converts natural energy such as solar energy and wind power energy into electric power, wherein said server facility is previously constructed and unitized as a server room, said server room is transferred into a site having said gas station facility using a trailer.

8. A management system of an ecology connection point which is a connection and transit site of information communication such as a telephone and an ISDN provided by an Internet provider, comprising a server facility which carries out connection and relay of information communication, a goods or service providing facility such as a gas station facility which refuels and charges vehicles, and a natural energy converting facility which converts natural energy such as solar energy and wind power energy into electric power, wherein a usage charge of said provider is set to a fixed charge, the number of contractors utilizing said ecology connection point is measured, at least a portion of the usage charge of the measured number of contractors is used for management of said ecology connection point.

9. A management system of a connection point of an Internet provider having a plurality of connection points, wherein a usage charge of said provider is set to a fixed charge, the number of contractors of each connection point is measured, at least a portion of the usage charge of the measured number of contractors is used for management of respective said connection points.
